(19) Europäisches Patentamt / European Patent Office / Office européen des brevets

(11) **EP 2 070 564 A1**

(12) **EUROPEAN PATENT APPLICATION**
published in accordance with Art. 153(4) EPC

(43) Date of publication:
**17.06.2009 Bulletin 2009/25**

(51) Int Cl.:
*A62B 18/02* (2006.01)   *B01D 39/14* (2006.01)
*B01D 39/16* (2006.01)   *B32B 5/26* (2006.01)
*D04H 1/40* (2006.01)

(21) Application number: **07829122.6**

(22) Date of filing: **03.10.2007**

(86) International application number:
**PCT/JP2007/069383**

(87) International publication number:
**WO 2008/041726 (10.04.2008 Gazette 2008/15)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **04.10.2006 JP 2006272546**

(71) Applicant: **UNI-CHARM CORPORATION
Shikokuchuo-shi,
Ehime 799-0111 (JP)**

(72) Inventors:
• **IWAMOTO, Takuya
Saijo-shi, Ehime 793-8585 (JP)**
• **TAKEUCHI, Naohito
Kanonji-shi, Kagawa 769-1602 (JP)**
• **ISHIGAMI, Makoto
Kanonji-shi, Kagawa 769-1602 (JP)**
• **TERAOKA, Hiromi
Kanonji-shi, Kagawa 769-1602 (JP)**

(74) Representative: **Fitchett, Stuart Paul
Saunders & Dolleymore LLP
European Patent Attorneys
9 Rickmansworth Road
Watford
WD18 0JU (GB)**

(54) **FILTER FOR MASK AND MASK FORMED USING THE SAME**

(57) The present invention provides a mask filter exhibiting a high antimicrobial/antiviral activity, a high dust filtration ability, a high ventilation characteristic, a high failure-strength and a high workability into a mask and the mask produced using such mask filter. An antimicrobial polyolefin fiber sheet is provided wherein the polyolefin fiber sheet has one or more spots in which 1/100 or more by volume of individual inorganic antimicrobial agent particles are exposed on surfaces of polyolefin fibers per fiber sheet area of $1.0 \times 10^{-2}$ mm$^2$ or has one or more spots in which the inorganic antimicrobial agent particles are exposed on the surfaces of polyolefin fibers each occupying an area of 0.01 $\mu$m$^2$ or larger per fiber sheet area of $1.0 \times 10^{-2}$ mm$^2$. Such polyolefin fiber sheet is arranged as the core layer and this core layer is sandwiched between upper and lower layers of dry nonwoven fabric to form the mask filter in the form of a laminated sheet. Such mask filter is used to form the mask.

FIG.1A

EP 2 070 564 A1

# FIG.1B

**Description**

TECHNICAL FIELD

The present invention relates to a filter as an important component of a mask and the mask produced using the same. More particularly, the present invention relates to such a filter formed from a laminated sheet comprising an antimicrobial fiber sheet as a core layer formed from polyolefin fibers containing the inorganic antimicrobial agent particles sandwiched by upper and lower layers of dry non-woven fabric and to the mask produced using such a filter. The filter according to the invention provides for stabilized antimicrobial/antiviral effect because a number of the inorganic antimicrobial agent particles kneaded into the polyolefin fibers which comprise the polyolefin fiber sheet as the core layer of the filter are exposed on the fiber surface. In addition, the filter according to the invention exhibits high dust filtration performance, high ventilation characteristic, high failure-strength and high workability into the mask. Use of the filter according to the invention exhibiting these advantageous properties enables the mask having high antimicrobial/antiviral effect as well as high dust filtration performance and free from feeling of breathing difficulty to be easily and smoothly produced with a high workability.

BACKGROUND TECHNIQUE

In order to prevent viral and microbial infection due to airborne droplet or air blast generated for example, by sneeze, cough or talking, masks have conventionally been used. Particularly in order to cope with the threat from prevalence of common cold and influenza, developing of new type infection such as avian influenza and coronavirus infection and microbial/viral infection developed in hospitals, these having come to the front in later years, various strategic researches and developments, for example, of antimicrobial mask and materials for such mask have been made. Antimicrobial masks and materials for such masks of prior art include the mask primarily comprising a woven fabric containing synthetic fibers having silver-plated or-deposited surface (PATENT DOCUMENT 1), the mask filter comprising antimicrobial charged filter obtained in form of the electret fiber after ground fabric has been treated by dispersion liquid containing antimicrobial particles such as supported inorganic silver particles so that these antimicrobial particles may adhere to the fiber surface of the ground fabric (PATENT DOCUMENT 2) and the antiviral mask comprising fibrous substrate having hydroxy acid simultaneously including hydroxyl group and carboxyl group such as citric acid, malic acid or lactic acid fixed thereto (PATENT DOCUMENT 3).
However, in the masks disclosed by PATENT DOCUMENTS 1 and 2, the antimicrobial agent such as silver or supported inorganic silver particles is attached to the fiber surface or fibrous ground fabric by after-treatment and the number of processing steps is correspondingly increased, resulting in decrease in production efficiency. In addition, the antimicrobial agent might drop off or fall away from the fiber surface. Eventually, long-lasting antimicrobial effect may become an issue. Furthermore, in the case of the antimicrobial charged filter used by the mask disclosed by PATENT DOCUMENT 2, the antimicrobial agent such as silver with which the fiber surface is coated limits the expected electret-effect even if the filter is subjected to the electret-processing in order to improve adsorption ability. In consequence, it is difficult not only to achieve sufficient adsorption ability but also to assure desired ventilation characteristic so that the mask wearer may suffer from feeling of smothering. For this mask of prior art, it is also difficult to achieve high workability. Hydroxy acid used in the mask disclosed by PATENT DOCUMENT 3 is organic antimicrobial agent which is insufficient with respect to the heat resistance as well as to the stability to maintain its desired antimicrobial activity. Therefore, the antimicrobial activity is likely to be deteriorated and at the same time intrinsic order of hydroxy acid might be generated in the course of heat treating the materials to produce the mask.
Non-woven fabrics or the like of polyolefin fibers kneaded with the inorganic antimicrobial agent containing antimicrobial metallic ion such as silver, copper, tin or zinc supported by the inorganic carrier are also known (PATENT DOCUMENTS 4 and 5). However, in the known non-woven fabric or the like of olefin fibers kneaded with the inorganic antimicrobial agent as disclosed in PATENT DOCUMENTS 4 and 5, most part of the antimicrobial agent are coated with polyolefin and present within the fibers without being exposed on the fiber surface and therefore it is impossible for the inorganic antimicrobial agent to exert the expected antimicrobial activity. Additionally, in such non-woven fabric or the like of prior art, a fiber diameter of polyolefin fibers as the component fiber is relatively large and a specific surface area of the non-woven fabric or the like is correspondingly small. Consequentially, when such non-woven fabric or the like is used as the mask filter, it can not expected that the desired antimicrobial activity is exerted on pathogenic organism such as virus and microbe.
[PATENT DOCUMENT 1] JP 11-19238 A
[PATENT DOCUMENT 2] JP 11-267236 A
[PATENT DOCUMENT 3] JP 2005-198676 A

[PATENT DOCUMENT 4] JP 05-153874 A
[PATENT DOCUMENT 5] JP 03-325915 A
[NON-PATENT DOCUMENT 1] "Industrial and Engineering Chemistry", 1956, Vol. 48, No. 8, p. 1342-1346

DISCLOSURE OF THE INVENTION

PROBLEM TO BE SOLVED BY THE INVENTION

In view of the problem as has been described above, it is a principal object of the present invention to provide a mask filter and a mask produced using such mask filter improved to exhibit stabilized high antimicrobial/antiviral activity so that airborne microbe, virus and mold as well as those expelled from human mouth along with breathing, cough, sneeze and talking can be reliably trapped and killed to be prevented from intruding into the human body through the respiratory organ or being dispersed from human body into the air.
The invention further aims to provide a mask filter and a mask produced using such mask filter improved not only to exhibit the stabilized high antimicrobial/antiviral activity but also to exhibit high dust filtration ability so that airborne dust also can be reliably trapped to be prevented from intruding into the human body through the respiratory organ.
Still another object of the invention is to provide a mask filter and a mask produced using such mask filter improved to exhibit high ventilation characteristic so that the mask wearer experiences comfortable feeling to wear rather than feeling of smothering.
Still another object of the invention is to provide a mask filter improved to exhibit sufficiently high failure-strength to be free from failure in the course of production and additionally to exhibit assure high workability so that the mask having improved properties as has been described above can be smoothly produced in simplified steps with a high production efficiency.

MEASURE TO SOLVE THE PROBLEM

To achieve the objects as have been described above, we conducted various researches and successfully developed a polyolefin fiber sheet exhibiting high antimicrobial activity and high stability. Specifically, it has been found that many of the inorganic antimicrobial agent particles kneaded into polyolefin resin are exposed on the polyolefin fiber surface to ensure that the high antimicrobial property inherent to the inorganic antimicrobial agent particles is sufficiently and effectively activated. Based on this finding, we have further advanced our researches from various aspects to develop a novel mask filter using the above-mentioned antimicrobial polyolefin fiber sheet. By way of experiment but expecting a successful result, a laminated sheet comprising the above-mentioned antimicrobial polyolefin fiber sheet as a core layer sandwiched by upper and lower layers of dry non-woven fabric was made and its qualifications as a mask sheet were examined.
As a result of examination, it was found that such laminated sheet exhibits high antimicrobial/antiviral activity and high stability of such activity and a mask produced using such laminate as the filter ensures so that airborne microbe, virus and mold as well as those expelled from human mouth along with breathing, cough, sneeze and talking can be reliably trapped and killed to be prevented from intruding into the human body through the respiratory organ or being dispersed from the human body into the air.
Furthermore, we have found that such laminated sheet exhibits high dust filtration ability so that airbone dust also can be reliably trapped to be prevented from intruding into the human body through the respiratory organ and simultaneously exhibits high ventilation characteristic so that the mask wearer experiences a comfortable feeling to wear rather than a feeling of smothering.
In addition, we have found that such laminated sheet exhibits sufficiently high failure-strength to be free from failure in the course of production and additionally to exhibit assure high workability so that the mask having improved properties as has been described above can be smoothly produced in simplified steps with a high production efficiency.
More specifically, the present invention provides

(1) a mask filter comprising a laminated sheet comprising a core layer defined by an antimicrobial polyolefin fiber sheet (I) selected from a polyolefin fiber sheet (Ia) and a polyolefin fiber sheet (Ib) both mentioned below and upper and lower layers of dry nonwoven fabric (II) sandwiching the core layer:

·polyolefin fiber sheet (Ia):

antimicrobial polyolefin fiber sheet (I) formed from polyolefin fibers comprising a polyolefin resin composition containing therein the inorganic antimicrobial agent particles wherein the polyolefin fiber sheet has one or more spots in which 1/100 or more by volume of the individual inorganic antimicrobial agent particles are exposed on the surface of polyolefin fiber per fiber sheet area of $1.0 \times 10^{-2}$ mm$^2$.

·polyolefin fiber sheet (Ib):

antimicrobial polyolefin fiber sheet formed from polyolefin fibers comprising a polyolefin resin composition containing therein the inorganic antimicrobial agent particles wherein the polyolefin fiber sheet has one or more spots in which the inorganic antimicrobial agent particles are exposed on the surface of polyolefin fibers each occupying an area of 0.01 $\mu$m$^2$ or larger per fiber sheet area of $1.0 \times 10^{-2}$ mm$^2$.

The invention further provides

(2) The mask filter defined by (1) wherein the inorganic antimicrobial agent particles contained in the polyolefin fiber of the antimicrobial polyolefin fiber sheet (Ia) and polyolefin fiber sheet (Ib) have an average particle diameter of 0.01 to 10 $\mu$m; and
(3) The mask filter defined by (1) or (2) wherein the polyolefin fibers constituting the antimicrobial polyolefin fiber sheet (Ia) and polyolefin fiber sheet (Ib) has an fiber diameter of 0.5 to 15 $\mu$m.

The invention further provies

(4) The mask filter defined by any one of (1) through (3) wherein the polyolefin fibers constituting the antimicrobial polyolefin fiber sheet (Ia) and polyolefin fiber sheet (Ib) is made of a polyolefin resin composition obtained by mixing a polyolefin resin (A) containing the inorganic antimicrobial agent particles with a polyolefin resin (B) containing none of the inorganic antimicrobial agent particles wherein an absolute value of a difference between a melt flow rate (MFR$_A$) (g/10 min) of the polyolefin resin (A) and a melt flow rate (MFR$_B$)(g/10 min) of the polyolefin resin (B) satisfies a following formula:

$$0 \leqq | MFR_A - MFR_B | \leqq 600 \qquad\qquad (1)$$

[both MFR$_A$ and MFR$_B$ are melt flow rates (unit: g/10 min) measured at a temperature of 230°C, under a load of 2.16 kg and for 10 minutes in accordance with JIS K 7210]

The invention further provides

(5) The mask filter defined by any one of (1) through (4) wherein the antimicrobial polyolefin fiber sheet (Ia) and polyolefin fiber sheet (Ib) are a nonwoven fabric made by a melt blow process using the polyolefin resin composition containing the inorganic antimicrobial agent particles;
(6) The mask filter defined by any one of (1) through (5) wherein the laminated sheet forming the mask filter further includes a layer of polyolefin fiber sheet (III) comprising polyolefin fibers containing none of the inorganic antimicrobial agent particles sandwiched between the dry nonwoven fabric (II) as the upper and lower layers and the antimicrobial polyolefin fiber sheet (Ia) or polyolefin fiber sheet (Ib); and
(7) The mask filter defined by any one of (1) through (5) wherein at least the antimicrobial polyolefin fiber sheet (Ia) and polyolefin fiber sheet (Ib) are electret-treated;

The invention provides

(8) The mask filter defined by any one of (1) through (7) wherein the respective layers constituting the laminated sheet are bonded together by hot melt resin or embossing treatment;
(9) The mask filter defined by any one of (1) through (8) wherein the dry nonwoven fabric (II) is selected from the group consisting of a thermal bond nonwoven fabric, a spun bond nonwoven fabric and a spun lace nonwoven fabric;
(10) The mask filter defined by any one of (1) through (9) wherein the mask filter exhibits ventilation characteristic in a range of 10 to 200 cc/cm$^2$/sec as measured by Frajour testing method; and
(11) The mask produced using the mask filter defined by any one of (1) through (10).

EFFECT OF THE INVENTION

In the antimicrobial polyolefin fiber sheet (I) defining the core layer of the laminated sheet forming the mask filter according to the present invention, a number of the inorganic antimicrobial agent particles kneaded into the polyolefin resin are exposed on the polyolefin fiber surface. Therefore, the high antimicrobial ability intrinsic to these inorganic antimicrobial agent particles is sufficiently and effectively activated with high stability.

In the mask filter according to the present invention, the upper and lower layers of the laminated sheet sandwiching the core layer are made of the dry nonwoven fabric (II) so that the antimicrobial polyolefin fiber sheet can be protected thereby. In this way, the inorganic antimicrobial agent particles would not easily drop off from the fiber sheet and, in consequence, the desired antimicrobial activity is stabilized.

With unique arrangement as has been described above, the mask produced using the mask filter according to the present invention ensures that airborne microbe, virus and mold as well as those expelled from the human mouth along with breathing, cough, sneeze and talking can be reliably trapped and killed to be prevented from intruding into the human body through the respiratory organ or being dispersed from the human body into the air.

In addition, the filter according to the present invention exhibits high dust filtration performance (trapping performance) and high ventilation characteristic so that airborne dust also can be reliably trapped to be prevented from intruding into the human body through the respiratory organ. The filter according to the invention exhibit also high ventilation characteristic so that the mask wearer experiences a comfortable feeling to wear rather than a feeling of smothering.

Particularly in the case of the mask filter wherein at least the antimicrobial polyolefin fiber sheet as the core layer of the laminated sheet is electret-processed and electrically charged, the filtration performance (trapping performance) against dust or the like is further improved.

In addition, the mask filter according to the present invention exhibits high failure-strength and high workability into the mask. Use of the filter according to the invention exhibiting these advantageous properties enables the mask having high antimicrobial/antiviral effect as well as high dust filtration performance and free from a feeling of breathing difficulty to be easily and smoothly produced with a high workability.

BRIEF DESCRIPTION OF THE DRAWINGS

[FIG. 1] Fig. 1 is a diagram schmetically illustrating an example of a mask produced using a mask filter according to the invention.

[FIG. 2] Fig. 2 is a diagram schematically illustrating another example of the mask produced using the mask filter according to the invention.

IDENTIFICATION OF REFERENCE NUMERALS USED IN THE DRAWINGS

| | |
|---|---|
| A | mask |
| A1 one | half of mask |
| A2 | another half of mask |
| 1 | mask spot adapted to cover mouth and nasal apertures |
| 1a | mask filter |
| 2 | ear encircling spots |
| 2a | nonwoven fabric |
| 3 | joint between adjacent mask halves $A_1$ and $A_2$ |
| 4 | joint between mask filter 1a and nonwoven fabric 2a |
| 5 | slit for insertion of ears |
| 6 | ear encircling cord |

DESCRIPTION OF THE PREFERRED EMBODIMENTS

Details of the present invention will be more fully understood from the description given hereunder with reference to the accompanying drawings.

A mask filter according to the present invention comprises a laminated sheet comprising a core layer defined by an antimicrobial polyolefin fiber sheet (I) selected from a polyolefin fiber sheet (Ia) and a polyolefin fiber sheet (Ib) both mentioned below and upper and lower layers of dry nonwoven fabric (II) sandwiching the core layer:

·polyolefin fiber sheet (Ia):

Antimicrobial polyolefin fiber sheet formed from polyolefin fibers comprising a polyolefin resin composition containing therein the inorganic antimicrobial agent particles wherein the polyolefin fiber sheet has one or more spots in which 1/100 or more by volume of the individual inorganic antimicrobial agent particles are exposed on the surfaces of polyolefin fibers per fiber sheet area of $1.0 \times 10^{-2}$ mm$^2$.

·polyolefin fiber sheet (Ib):

Antimicrobial polyolefin fiber sheet formed from polyolefin fibers comprising a polyolefin resin composition containing therein the inorganic antimicrobial agent particles wherein the polyolefin fiber sheet has one or more spots in which the inorganic antimicrobial agent particles are exposed on the surfaces of polyolefin fibers each occupying an area of 0.01 $\mu$m$^2$ or larger per fiber sheet area of $1.0 \times 10^{-2}$ mm$^2$.

In the polyolefin fiber sheet (Ia) and the polyolefin fiber sheet (Ib), the inorganic antimicrobial agent particles kneaded into a polyolefin resin composition forming these fibers, for example, by a melt kneading process are not completely embedded in the polyolefin resin composition (i.e., in the polyolefin fibers) but a number of these particles are exposed on the surfaces of the polyolefin fibers formed from the polyolefin resin composition.

The polyolefin fiber sheet (Ia) has relatively many spots in which 1/100 or more by volume of the individual inorganic antimicrobial agent particles are exposed on the surfaces of polyolefin fibers (sometimes referred hereinafter to as "1/100 or more of the individual inorganic antimicrobial agent particles exposed spots") as one or more spots per fiber sheet area of $1.0 \times 10^{-2}$ mm$^2$ wherein the inorganic antimicrobial agent particles are not completely embedded in the polyolefin fibers but a number of these particles are exposed on the fiber surfaces so that the antimicrobial ability intrinsic to the inorganic antimicrobial agent particles themselves are sufficiently activated.

In the polyolefin fiber sheet (Ia), the number of the 1/100 or more of the individual inorganic antimicrobial agent particles exposed spots per fiber sheet area of $1.0 \times 10^{-2}$ mm$^2$ is preferably two or more, more preferably three or more and most preferably four or more.

In the polyolefin fiber sheet (Ia), so far as the requirement that "the fiber sheet (Ia) has one or more 1/100 or more of the individual inorganic antimicrobial agent particles exposed spots per fiber sheet area of $1.0 \times 10^{-2}$ mm$^2$" is met, it is not essential that the exposed spot calculated on the basis of scanning electron microscope (SEM) photograph has an area of $1.0 \times 10^{-2}$ mm or larger.

Whether the inorganic antimicrobial agent particles are exposed on the polyolefin fiber surfaces or not can be determined from the photograph (SEM photograph) obtained by the scanning electron microscope (SEM) of the surface of the polyolefin fiber sheet. The spot in which the inorganic antimicrobial agent particles are exposed on the polyolefin fiber surfaces presents bright color in comparison to the polyolefin resin fibers having none of the particles exposed thereon and therefore can be clearly distinguished from the exposed particle-free spot of the polyolefin resin fibers.

In the polyolefin fiber sheet (Ia), the size and the number of the spots in which inorganic antimicrobial agent particles exposed on the polyolefin fibers and present bright color may be measured from SEM photograph of the polyolefin fiber sheet surface to know the number of 1/100 or more by volume of the individual inorganic antimicrobial agent particles exposed spots per an area of $1.0 \times 10^{-2}$ mm$^2$ of the polyolefin fiber sheet.

More specifically, if the inorganic antimicrobial agent particles are spherical or substantially spherical, the portions of these particles exposed on the polyolefin fiber surfaces always appear in circular or substantially circular shapes each having a predetermined diameter on SEM photograph (because a cross section of a sphere is always presents a circular shape along wherever the section is taken). The diameter of such circle may be measured and compared to the average diameter of the inorganic antimicrobial agent particles to determine whether 1/100 or more by volume of the individual inorganic antimicrobial agent particles.

For example, if the diameter of the circle corresponding to the spot in which the individual inorganic antimicrobial agent particles coincides with the average diameter of the inorganic antimicrobial agent particles in photograph taken through a scanning electron microscope (SEM), it will be concluded that 1/2 or more by volume of the individual inorganic antimicrobial agent particle is exposed on the fiber surface. If the diameter of the circle corresponding to the spot in which the individual inorganic antimicrobial agent particles is 1/20 or more of the average diameter of the inorganic antimicrobial agent particles, it will be concluded that 1/100 or more in volume of the individual inorganic antimicrobial agent particle is exposed on the polyolefin fiber surface.

On the other hand, if the shape of the individual inorganic antimicrobial agent particles contained in polyolefin resin is not spherical or not substantially spherical, the individual inorganic antimicrobial agent particles exposed on the polyolefin fiber surfaces will not necessarily present a circular or substantially circular shape in SEM photograph. Even when photographed image of the individual inorganic antimicrobial agent particles presents a circular or substantially circular shape, the exposed volume of individual antimicrobial agent particles may be sometimes less than 1/100 by volume. In such case, it is not easy to determine whether 1/100 or more by volume of the individual inorganic antimicrobial agent particles is exposed on the polyolefin fiber surfaces or not. In this case, inclusive the case in which the exposed individual inorganic antimicrobial agent particles are neither circular nor substantially circular, the exposed area of the individual inorganic antimicrobial agent particles may be measured instead of measuring the exposed percentage by volume to determine a degree of the exposure.

In the mask filter according to the present invention, the polyolefin fiber sheet (Ib) may be used as the polyolefin fiber sheet (I) defining the core layer of the laminated sheet to provide the mask filter with high antimicrobial activity just like the case in which the polyolefin fiber sheet (Ia) is used as the core layer so far as it is determined through SEM photograph of the polyolefin fiber surfaces that the polyolefin fiber sheet (Ib) has one or more spots in which the inorganic antimicrobial agent particles are exposed on the polyolefin fiber surfaces each occupying an area of 0.01 $\mu m^2$ per an area of $1.0 \times 10^{-2}$ mm$^2$ of the polyolefin fiber sheet.

The polyolefin fiber sheet (Ib) preferably has two or more spots, more preferably three or more spots and most preferably four or more spots in which the inorganic antimicrobial agent particles are exposed on the polyolefin fiber surface each occupying an area of 0.01 $\mu m^2$ per an area of $1.0 \times 10^{-2}$ mm$^2$ of the polyolefin fiber sheet.

So far as the requirement that "the polyolefin fiber sheet (Ib) has one or more spots in which the inorganic antimicrobial agent particles are exposed on the polyolefin fiber surfaces each occupying an area of 0.01 $\mu m^2$ per an area of $1.0 \times 10^{-2}$ mm$^2$ of the polyolefin fiber sheet", it is not essential that 1/100 or more by volume of the inorganic antimicrobial agent particles should be exposed on the polyolefin fiber surfaces.

If the individual inorganic antimicrobial agent particles kneaded into the polyolefin fibers are spherical or substantially spherical, the polyolefin fiber sheet (Ia) and/or the polyolefin fiber sheet (Ib) may be used as the core layer in the laminated sheet forming the mask filter.

On the scanning electron microscope (SEM) photograph of the surface of the polyolefin fiber sheet (Ia) and the polyolefin fiber sheet (Ib), both the polyolefin fibers on the outermost surface and the polyolefin fibers lying in the depth appear and it is often difficult to distinguish the polyolefin fibers on the outermost surfaces from the polyolefin fibers lying in the depth. In view of this, we measured the size and the number of the inorganic antimicrobial agent particles exposed on the polyolefin fiber surfaces on the basis of the SEM photograph without distinguishing the fibers lying on the outermost surfaces of the polyolefin fibers from the fibers lying in the depth, i.e., with all the inorganic antimicrobial agent particles appearing on the SEM photograph. Therefore, the requirement for the polyolefin fiber sheet (Ia) and the polyolefin fiber sheet (Ib) as has been described above is based on the measurement conducted in this manner.

The individual inorganic antimicrobial agent particles kneaded into the polyolefin fibers constituting the polyolefin fiber sheet (I) [i.e., the polyolefin fiber sheet (Ia) and/or the polyolefin fiber sheet (Ib)] has an average particle diameter preferably of 0.01 to 10 $\mu m$, more preferably of 0.1 to 8 $\mu m$ and most preferably of 0.3 to 6 $\mu m$ in order to avoid yarn break in the course of producing the polyolefin fibers and the polyolefin fiber sheet (I), dropping off of the inorganic antimicrobial agent particles, and/or formation of "shot" (polymer sphere). If the average particle diameter of the individual inorganic antimicrobial agent particles exceeds 10 $\mu m$, the process for producing the polyolefin fibers and the polyolefin fiber sheet (I) will possibly be accompanied with yarn break, dropping off of the inorganic antimicrobial agent particles from the fiber, and/or formation of "shot". If the average particle diameter is smaller than 0.01 $\mu m$, on the other hand, the inorganic antimicrobial agent particles might agglutinate and, in consequence, could not be uniformly kneaded into the polyolefin fibers.

It should be understood that the average particle diameter of the individual inorganic antimicrobial agent particles is the average particle diameter measured using a laser diffraction particle size distribution measuring apparatus by a method will be exemplarily described below.

The inorganic antimicrobial agent particles to be kneaded into the polyolefin fibers constituting the polyolefin fiber sheet (I) may be selected from a wide range of materials so far as these materials are harmless to humans, sufficiently resistant to potential volatilization, decomposition and deterioration, for example, under heating in the course of melt spinning of the fibers, and sufficiently resistant to decrease of the antimicrobial ability in a short period.

Examples of the inorganic antimicrobial agent particles which can be used in the present invention include inorganic antimicrobial agent particles of various antimicrobial metallic ions such as silver ion, copper ion, zinc ion and tin ion supported by an inorganic carrier, oxidized titanium-based inorganic antimicrobial agent particles and a mixture thereof. For the inorganic antimicrobial agent particles comprising antimicrobial metallic ion supported by an inorganic carrier, the inorganic carrier is not limited to any particular type and various types of inorganic carrier can be used so far as the polyolefin fiber sheet (I) are not deteriorated thereby. Preferably, inorganic carriers having high ion exchange capacity, high metallic ion adsorption capacity and high metallic ion retention capacity are used. Examples of such inorganic carriers include zeolite, zirconium phosphate and calcium phosphate. Among them, zeolite having high metallic ion exchange capacity can be most preferably used.

Among the inorganic antimicrobial agent particles as have been described above, the inorganic antimicrobial agent particles comprising silver ion supported by the inorganic carrier can be most preferably used.

Content of the inorganic antimicrobial agent particles to be kneaded into the polyolefin fibers constituting the polyolefin fiber sheet (I) is not specified and may be adjusted depending on various factors such as a particular polyolefin constituting the fibers, finenesses of the fibers, particular type and size of the inorganic antimicrobial agent particles. Generally, the content of the inorganic antimicrobial agent particles on the basis of the mass of the polyolefin resin composition forming the polyolefin fibers (i.e., the mass of the polyolefin resin composition containing also the inorganic antimicrobial agent particles) is preferably in a range of 0.01 to 10% by mass, more preferably in a range of 0.05 to 5% by mass and most preferably in a range of 0.1 to 2% by mass from the viewpoint of prevention of troubles potentially occurring in the course of spinning.

The polyolefin fibers constituting the polyolefin fiber sheet (I) has its average fiber diameter preferably in a range of 0.5 to 15 $\mu$m, more preferably in a range of 0.7 to 10 $\mu$m, further preferably in a range of 0.8 to 7 $\mu$m and most preferably in a range of 1 to 5 $\mu$m. The average fiber diameter of the polyolefin fiber may be selected from the range as has been described above to increase the density as well as the number of the inorganic antimicrobial agent particles kneaded into the polyolefin fibers are exposed on the fiber surfaces and thereby not only to improve the antimicrobial ability of the polyolefin fiber sheet (I) but also to improve the flexibility and the filtration capacity thereof. However, the average fiber diameter of the polyolefin fibers less than 0.5 $\mu$m will deteriorate the failure strength and handiness of the polyolefin fiber sheet (I). On the other hand, if the average fiber diameter of the polyolefin fibers exceeds 15 $\mu$m, the degree of exposure of the inorganic antimicrobial agent particles kneaded into the polyolefin fibers on the fiber surface will decrease and the antimicrobial ability of the polyolefin fiber sheet (I) will correspondingly decrease.

It should be understood that the average fiber diameter of the polyolefin fibers constituting the polyolefin fiber sheet is the average fiber diameter calculated from the fiber diameter measured using the scanning electron microscope (SEM) photograph of the polyolefin fiber sheet by a method will be exemplarily described below.

A thickness of the polyolefin fiber sheet (I) is preferably in a range of 0.05 to 5 mm, more preferably in a range of 0.1 to 3 mm and further preferably in a range of 0.15 to 2 mm from the viewpoints of various factors such as stability for production, handiness, antimicrobial effect, dust filtration capacity (trapping capacity) and workability into the mask. The excessively thin polyolefin fiber sheet (I) will lead to disadvantages such as decreased failure strength, deterioration of antimicrobial ability, dust filtration capacity, handiness in the course of laminating the fiber sheet (I) with the dry nonwoven fabric layers and the shape retention stability. If the polyolefin fiber sheet (I) is excessively thick, the mask filter consisting of the polyolefin fiber sheet and the dry nonwoven fabric will become unacceptably weighty, and in addition, the flexibility, the handiness, the workability into the mask and feeling to wear the mask will be deteriorated.

From viewpoints of factors such as the stability and the handiness in the course of production, the basis weight of the polyolefin fiber sheet (I) is preferably in a range of 3 to 200g/m$^2$, more preferably in a range of 5 to 100g/m$^2$ and further preferably in a range of 10 to 50g/m$^2$.

If the basis weight of the polyolefin fiber sheet (I) is less than 3g/m$^2$, the failure strength will decrease and, if the basis weight exceeds 200g/m$^2$, on the other hand, the polyolefin fiber sheet (I) will become unacceptably weighty, the flexibility will decrease and the handiness will be deteriorated.

Examples of the polyolefin resin forming the polyolefin fibers include polypropylene, polyethylene, polybutene and a mixture thereof. Among them, polypropylene is preferable because polypropylene exhibits high moldability and contributes to reduction of a manufacturing cost particularly when the polyolefin fiber sheet (I) is produced by the melt blow process.

When the polyolefin resin composition kneaded with the inorganic antimicrobial agent particles is used to produce the polyolefin fiber sheet (I) by the melt blow process, the inorganic antimicrobial agent particles contained in polymer will possibly cause the polymer sphere referred to "shot" to be formed. If the polyolefin fiber sheet (nonwoven fabric) containing therein a large number of "shots" is used as the mask filter, the "shots" will cause undesirable "leak". Polypropylene may be used to form the polyolefin fiber sheet (I) and thereby to prevent the polyolefin fiber from being formed with these shots.

The polyolefin resin constituting the polyolefin fibers exhibits a melt flow rate (MFR) preferably in a range of 5 to 2500 g/10 min and more preferably in a range of 40 to 1600 g/10 min as measured at a temperature of 230°C and under a load of 2.16 kg for 10 minutes in accordance with JIS K 7210. By use of the polyolefin resin exhibiting MFR in the above-mentioned range, the polyolefin resin can be smoothly and uniformly melt spun in the course of producing the polyolefin fiber sheet (I) and thereby the polyolefin fiber sheet (I) having a fine fiber diameter and a uniform texture can be obtained. In the case of the polyolefin resin comprising a mixture of two or more types of polyolefin resin, the term "MFR" used herein means the MFR measured on the mixture of two or more types of polyolefin resin.

As for production of the polyolefin fiber sheet (I) , while the inorganic antimicrobial agent particles may be mixed with the polyolefin resin at once to prepare the polyolefin resin composition and this composition may be used to produce the polyolefin fiber sheet (I), the polyolefin resin composition containing the inorganic antimicrobial agent particles may be prepared preferably by following steps as will be described below so as to obtain smoothly the polyolefin fiber sheet (I) in which a number of the inorganic antimicrobial agent particles are exposed on the fiber surface to make the polyolefin fiber sheet (I) to have high antimicrobial ability.

Using the polyolefin resin (A) and the polyolefin resin (B) respectively exhibiting melt flow rates an absolute differential value of which satisfies a formula (1), the inorganic antimicrobial agent particles are first mixed with the polyolefin resin (A) in molten state to prepare the composition for the polyolefin resin (A), then this composition is mixed with the polyolefin resin (B) containing none of the inorganic antimicrobial agent particles to prepare the polyolefin resin composition containing the inorganic antimicrobial agent particles and thereafter the latter polyolefin resin composition is used to the polyolefin fiber sheet (I):

$$0 \leqq | \; MFR_A - MFR_B \; | \leqq 600 \qquad\qquad (1)$$

[In the above formula, $MFR_A$ represents a melt flow rate of the polyolefin resin (A) and $MFR_B$ represents a melt flow rate of the polyolefin resin(B), both melt flow rates (g/10 min) having been measured at a temperature of 230°C, under a load of 2.16 kg for 10 minutes in accordance with JIS K 7210.]

When the polyolefin resin (A) and the polyolefin resin (B) satisfying the above-mentioned formula (1) are used to prepare the polyolefin resin composition containing the inorganic antimicrobial agent particles by the above-mentioned process and this composition is used to produce the polyolefin fiber sheet (I), the absolute differential value between $MFR_A$ of the polyolefin resin (A) and $MFR_B$ of the polyolefin resin (B) is preferably 400 or less and more preferably in a range of 0 to 300.

In the process using the polyolefin resin (A) and the polyolefin (B) , assumed that the inorganic antimicrobial agent particles are previously kneaded into the polyolefin resin (A) , then the polyolefin resin (B) is mixed with this polyolefin resin (A) to prepare the polyolefin resin composition containing the inorganic antimicrobial agent particles and such polyolefin resin composition is used to produce the polyolefin fiber sheet (I) , a mass ration between the polyolefin resin (A) (resin before kneaded with the inorganic antimicrobial agent particles) and the polyolefin resin (B) actually used in the process is preferably in a range of 99 : 1 to 1 : 99, more preferably in a range of 80 : 20 to 3 : 97 and further preferably in a range of 50 : 50 to 5 : 95.

In such process using the polyolefin resin (A) and the polyolefin (B) to prepare the polyolefin resin composition, the inorganic antimicrobial agent particles may be kneaded into the polyolefin resin (A), for example, by using a biaxial extruder and then the polyolefin resin (B) may be mixed with this polyolefin resin (A) or a previously chip blended master batch may be mixed with the polyolefin resin (B) by extrusion process. When the master batching process is adopted, the polyolefin resin (A) such as polypropylene is kneaded with the inorganic antimicrobial agent particles to prepare the master batch, then the polyolefin resin (B) such as polypropylene is mixed with this master batch to prepare the polyolefin resin composition containing the inorganic antimicrobial agent particles. This process is advantageous in that the inorganic antimicrobial agent particles are well dispersed in the polyolefin resin and these particles are assisted to be exposed on the surfaces of the polyolefin fibers.

An apparatus used to knead the inorganic antimicrobial agent particles into the polyolefin resin is not limited to a particular apparatus and any apparatus may be used for this purpose so far as the inorganic antimicrobial agent particles can be uniformly mixed with the polyolefin resin. For example, the kneader such as the biaxial extruder may be used to mix the inorganic antimicrobial agent particles into the polyolefin resin uniformly and with high productivity.

The polyolefin resin composition containing the inorganic antimicrobial agent particles constituting the polyolefin fiber of the polyolefin fiber sheet (I) may contain, if desired, the other polymer(s) and/or additive(s) without departing from the scope of the present invention. The additives include, for example, antioxidant, radical absorber, weathering agent such as UV ray absorber, surfactant and pigment.

The process used to produce the polyolefin fiber sheet (I) may be selected from various processes so far as the polyolefin fiber sheet (Ia) and/or the polyolefin fiber sheet (Ib) having the characteristics or properties as have been described above. Among them, the melt blow process is particularly preferable to produce the polyolefin fiber sheet (I). Specifically, the melt blow process can ensure that the polyolefin fiber constituting the polyolefin fiber sheet (I) has an extremely small average fiber diameter, in general, of 15 $\mu$m or less, often of 10 $\mu$m or less and sometimes of 5 $\mu$m. Consequentially, this process assures that correspondingly increased number of the inorganic antimicrobial agent particles is exposed on the surfaces of the polyolefin fibers constituting the polyolefin fiber sheet (I) and thereby makes it possible to produce, with a high productivity, the polyolefin fiber sheet (I) exhibiting various advantageous characteristics such as high antimicrobial ability, appropriate flexibility and high filtration performance.

With respect to the melt blow process to produce the polyolefin fiber sheet (nonwoven fabric), since the basic equipment and steps were disclosed in NON-PATENT DOCUMENT 1, many other processes have been proposed. The polyolefin fiber sheet of the invention also may be produced by the process disclosed in NON-PATENT DOCUMENT 1 or the other processes of well known art.

For example, the polyolefin resin composition containing the inorganic antimicrobial agent particles may be fed to the melt blow nonwoven fabric manufacturing equipment and molten at a temperature of 160 to 340°C in an extruder therein, then the molten composition is extruded at a temperature of 200 to 320°C through a plurality of spinning nozzles arranged in line and at the same time exposed to 200 to 330°C of hot air jet from a slit provided in the vicinity of the spinning nozzles to fibrillate the composition and finally the fibers obtained by this fibrillation are caught by net conveyor or the like provided below to produce the polyolefin fiber sheet.

In the mask filter according to the present invention, the laminated sheet defining the mask filter may have three-layered structure of dry nonwoven fabric (II) /polyolefin fiber sheet (I)/dry nonwoven fabric (II) or further comprises "polyolefin fiber sheet (III)" containing none of the inorganic antimicrobial agent particles sandwiched between the dry nonwoven fabric (II) defining the surface layer and the polyolefin fiber sheet (I) defining the core layer. By sandwiching such polyolefin fiber sheet (III) between the dry nonwoven fabric (II) defining the surface layer and the layer of the polyolefin fiber sheet (I), thickness, basis weight, permeability and trapping efficiency of the laminated sheet defining the mask filter can be finely adjusted.

The laminated sheet further comprising this polyolefin fiber sheet (III) defining the mask filter of the present invention may have typical layered structures as will be described:

(a) dry nonwoven fabric (II) (outermost layer of the mask)/polyolefin fiber sheet (III)/polyolefin fiber sheet (I) /dry nonwoven fabric (II) (innermost layer of the mask facing wearer's mouth);
(b) dry nonwoven fabric(II) (outermost layer of the mask)/polyolefin fiber sheet (I)/polyolefin fiber sheet (III)/dry nonwoven fabric (II) (innermost layer facing wearer's mouth);
(c) dry nonwoven fabric (II)(outermost layer of the mask)/polyolefin fiber sheet (III)/polyolefin fiber sheet (I)/polyolefin fiber sheet (III)/dry nonwoven fabric (II) (innermost layer facing wearer's mouth).

As the polyolefin fiber sheet (III) formed from the polyolefin fibers containing none of the inorganic antimicrobial agent particles, a melt blow nonwoven fabric or a spun bond nowoven fabric produced from the polyolefin resin containing none of the inorganic antimicrobial agent particles is preferable from the viewpoints of adhesion properties and permeability.

The average fiber diameter of the polyolefin fibers constituting the polyolefin fiber sheet (III) is preferably in a range of 0.5 to 15 $\mu$m, more preferably in a range of 0.7 to 10 $\mu$m and further preferably in a range of 1 to 5 $\mu$m just as in the case of the polyolefin fiber sheet (I).

The basis weight of the polyolefin fiber sheet (III) is preferably in a range of 5 to 100 $g/m^2$, more preferably in a range of 10 to 70 $g/m^2$ and further preferably in a range of 10 to 50 $g/m^2$.

The thickness of the polyolefin fiber sheet (III) is preferably in a range of 0.05 to 5 mm, more preferably in a range of 0.1 to 3 mm and further preferably in a range of 0.15 to 2 mm.

The polyolefin fiber sheet (I) alone or both the polyolefin fiber sheet (I) and the polyolefin fiber sheet (III) may be preferably electret-processed (i.e., charging processed) to improve a dust removing efficiency (filtration efficiency, trapping efficiency). Particularly for polypropylene used as the polyolefin fibers constituting the polyolefin fiber sheet (I) and the polyolefin fiber sheet (III), the electret-processing can be carried out in an industrial scale and a charging effect can be stably maintained for a long period. The polyolefin fiber sheet (I) and the polyolefin fiber sheet (III) can be electret-processed by use of the electret-processing equipment of well known art. Specifically, the electret-processing is preferably carried out typically at a temperature of 20 to 120°C by using the needle electrodes spaced from each other by a distance of 10 to 50 mm and applied with 10 to 50 kV.

The dry nonwoven fabric (II) defining opposite surface layers of the laminated sheet used as the mask filter of the present invention may be formed by thermal bond nonwoven fabric, spun bond nonwoven fabric, mechanical bond nonwoven fabric (such as spun lace nonwoven fabric and needle punching nonwoven fabric) or one or two thereof.

Among them, the thermal bond nonwoven fabric is obtained by heating thin fibrous web comprising short fiber of fusion bond type (typically short fiber of low fusion point thermoplastic polymer) so that the individual fibers may be fusion bonded together.

The thermal bond nonwoven fabric adapted to be used for the present invention includes typical examples as follow:

($a_1$) thermal bond nonwoven fabric obtained by blending, fibrillating and webifying core-sheath type composite or mixed spun short fibers each comprising high fusion point thermoplastic polymer defining a core component and low fusion point thermoplastic polymer defining a sheath component (together with non-fusible short fibers, if desired), and then by heat-treating the web so that the individual fibers may be bonded together under fusion bonding activity intrinsic to the sheath component of the core-sheath type composite or mixed short fibers; and
($a_2$) thermal bond nonwoven fabric obtained by blending, fibrillating and webifying low fusion point thermoplastic polymer short fibers and high fusion point thermoplastic polymer short fibers and/or non-fusible short fibers, and then by heat-treating the web so that the individual fibers may be bonded together as the low fusion point polymer short fiber is fused.

In the core-sheath type composite or mixed spun short fibers used to produce the thermal bond nonwoven fabric classified above as ($a_1$), a difference of fusion points between the high fusion point thermoplastic polymer and the low fusion point thermoplastic polymer is preferably 10°C or higher and more preferably in a range of 20 to 150°C.

Examples of polymer combination for production in the core-sheath type composite **or mixed spun short fibers** include polypropylene(core)/polyethylene(sheath), polyethylene terephthalate(core)/polyethylene(sheath), polypropylene(core)/copolymerized polypropylene(sheath), and polyethylene terephthalate(core)/copolymerized polyethylene terephthalate (sheath).

In the low fusion point thermoplastic polymer short fibers and the high fusion point thermoplastic polymers used to produce the thermal bond nonwoven fabric classified above as ($a_2$), a difference of fusion points between the low fusion point thermoplastic polymer short fibers and the high fusion point thermoplastic polymers is preferably 10°C or higher and more preferably in a range of 20 to 150°C. Examples of short fiber combination for production of the thermal bond nonwoven fabric classified above as ($a_2$) include polyethylene short fiber (low fusion point) /polypropylene short fiber (high fusion point), polyethylene short fibers (low fusion point)/polyethylene terephthalate short fiber (high fusion point), copolymerized polypropylene short fiber (low fusion point)/polypropylene short fibers (high fusion point), copolymerized polyethylene terephthalate short fibers (low fusion point)/polyethylene terephthalate short fibers (high fusion point), polyethylene short fibers (low fusion point)/cellulose fibers (non-fusible) and polyethylene short fibers (low fusion point)/cotton fibers (non-fusible).

The spun bond nonwoven fabric which can be used for the present invention may be selected from the group of types which are obtained by drawing filamentary chemical fiber discharged from the spinning nozzles, for example, under air blast, then accumulating this directly on the conveyor so as to form a continuous web and by bonding, fusing or interlocking the individual chemical fibers (filaments) constituting the web together.

Among various types of spun bond nonwoven fabric useful for the present invention, the spun bond nonwoven fabric comprising filamentary fiber obtained by melt spinning thermoplastic polymer having fiber-forming properties such as polyester, nylon or polypropylene is particularly preferable from viewpoints of many factors such as easiness to be laminated with the polyolefin fiber sheet, easiness to produce this spun bond nonwoven fabric, high availability, dimensional stability and failure strength.

The mechanical bond nonwoven fabric which can be used for the present invention includes, in addition to the spun lace nonwoven fabric, those which are obtained by blending, fibrillating and carding synthetic fibers of short fiber type (e.g., polyester, nylon, polyolefin or acryl fibers), natural fibers (e.g., cotton, hemp or wool) or mixture thereof to webify such fiber and by punching this web so that the individual fibers are interlocked to form nonwoven fabric.

As the dry nonwoven fabric (II) defining the inner and outer surfaces of the laminated sheet forming the mask filter according to the present invention, the thermal bond nonwoven fabric and the spun bond nonwoven fabric, particularly the thermal bond nonwoven fabric is preferable from the viewpoints of factors such as an easiness to be laminated with the polyolefin fiber sheet (I) and the polyolefin fiber sheet (III) and a dimensional stability.

In the dry nonwoven fabric (II) defining the inner and outer surfaces of the laminated sheet forming the mask filter, the average fiber diameter of the component fibers is preferably in a range of 15 to 50 $\mu$m, more preferably in a range of 20 to 40 $\mu$m and further preferably in a range of 20 to 30 $\mu$m. If the average fiber diameter of the component fibers of the dry nonwoven fabric (II) is excessively small, the permeability will be deteriorated, and if the average fiber diameter is excessively large, the laminated sheet will become too rigid and the texture will be deteriorated.

Thickness of the dry nonwoven fabric (II) is preferably in a range of 0.10 to 0.50 mm, more preferably in a range of 0.15 to 0.40 mm and further preferably in a range of 0.18 to 0.30 mm from the viewpoints of factors such as stability for production, handiness, easiness to be laminated with the polyolefin fiber sheet and dimensional stability. Excessively thin dry nonwoven fabric (II) will be apt to be accompanied with disadvantages such as decrease in the failure strength and decrease in the easiness to be laminated with the polyolefin fiber sheet (I) as well as undesirable flattening. If the dry nonwoven fabric (II) is excessively thick, on the contrary, the mask filter formed by the laminated sheet will become weighty, the flexibility will become poor and, in addition, handiness, workability into the mask and feeling to wear will be deteriorated.

Basis weight of the dry nonwoven fabric (II) is preferably in a range of 15 to 60 g/m$^2$, more preferably in a range of 20 to 50 g/m$^2$ and further preferably in a range of 25 to 40 g/m$^2$.

Excessively low basis weight of the dry nonwoven fabric (II) will often result in decrease, for example, of the failure strength and excessively high basis weight thereof will often result in deterioration, for example, of the permeability and the workability required for the mask filter.

The dry nonwoven fabric forming the layers opposite in the thickness direction of the laminated sheet and defining the inner and outer surfaces thereof may be the same to each other or different from each other.

Specific examples of the laminar structure of the laminated sheet forming the mask filter include:

(a) thermal bond nonwoven fabric/polyolefin fiber sheet (I)/thermal bond nonwoven fabric;
(b) thermal bond nonwoven fabric (outermost layer of the mask)/melt blow nonwoven fabric[polyolefin fiber sheet (III)]/polyolefin fiber sheet (I) /thermal bond nonwoven fabric (innermost layer facing wearer's mouth);
(c) thermal bond nonwoven fabric (outermost layer of the mask)/spun bond nonwoven fabric[polyolefin fiber sheet (III)]/polyolefin fiber sheet (I)/thermal bond nonwoven fabric (innermost layer facing wearer's mouth);

(d) thermal bond nonwoven fabric (outermost layer of the mask)/polyolefin fiber sheet (I)/melt blow nonwoven fabric [polyolefin fiber sheet (III)]/thermal bond nonwoven fabric (innermost layer facing wearer's mouth);

(e) thermal bond nonwoven fabric (outermost layer of the mask)/polyolefin fiber sheet (I)/spun bond nonwoven fabric [polyolefin fiber sheet (III)]/thermal bond nonwoven fabric (innermost layer facing wearer's mouth);

(f) thermal bond nonwoven fabric (outermost layer of the mask)/spun bond nonwoven fabric [polyolefin fiber sheet (III)]/polyolefin fiber sheet (I)/spun bond nonwoven fabric [polyolefin fiber sheet (III)]/thermal bond nonwoven fabric (innermost layer facing wearer's mouth); and

(g) thermal bond nonwoven fabric (outermost layer of the mask)/melt blow nonwoven fabric [polyolefin fiber sheet (III)]/polyolefin fiber sheet (I)/melt blow nonwoven fabric[polyolefin fiber sheet (III)]/thermal bond nonwoven fabric (innermost layer facing wearer's mouth).

Among them, the mask filters having laminar structures (a) , (d) and (e) are preferable from the viewpoints of the high permeability and the antimicrobial sheet provided in the vicinity of the outermost layer.

Total thickness of the laminated sheet forming the mask filter is preferably in a range of 0.1 to 7 mm, more preferably in a range of 0.2 to 5 mm and further preferably in a range of 0.2 to 3 mm from the viewpoints of several factors such as handiness, workability into the mask, a feeling to wear the mask using the mask filter according to the invention and dimensional stability. Excessively thin laminated sheet will disadvantageously lead to deterioration in the handiness for working the laminated sheet into the mask, the failure strength, the antimicrobial activity, the dust filtration performance, the feeling to wear the mask and the dimensional stability. Excessively thick laminated sheet, on the contrary, will disadvantageously lead to deterioration in the handiness for working the laminated sheet into the mask and the permeability and, in consequence, will cause the wearer to suffer from a feeling of smothering.

Total basis weight of the laminated sheet forming the mask filter of the present invention is preferably in a range of 35 to 300 $g/m^2$, more preferably in a range of 40 to 200 $g/m^2$ and further preferably in a range of 50 to 100 $g/m^2$. Excessively low basis weight of the laminated sheet may disadvantageously result in deterioration in the failure strength and the workability while excessively high basis weight of the laminated sheet may also disadvantageously result in degradation in the workability into the mask, the permeability of the mask filter and the feeling to wear.

Permeability of the mask filter according to the present invention is preferably in a range of 10 to 200 $cc/cm^2/sec$ and more preferably in a range of 20 to 150 $cc/cm^2/sec$ as measured by Frajour method from the viewpoints of a feeling to wear the mask without suffering from a feeling of smothering and heat-retention property.

The term "permeability as measured by Frajour method" used herein should be understood to be the permeability measured in accordance with JIS L 1096.

How to laminate the polyolefin fiber sheet (I), the dry nonwoven fabric layers (II) and optionally the polyolefin fiber sheet (III) together in order to make the laminated sheet forming the mask filter is not specified so far as this or these fiber sheet(s) and the nonwoven fabric layers can be properly bonded together.

For example, it is possible to obtain the laminated sheet using hot melt adhesive or using heat-embossing technique. Of these two approaches, the method using the heat-embossing technique is preferably adopted since it is unnecessary of this technique to use adhesive and working is correspondingly simplified.

It should be understood here that any mode of the method can be utilize to laminate the polyolefin fiber sheet (I), the dry nonwoven fabric layers (II) and optionally the polyolefin fiber sheet (III) so far as use of that mode does not interfere with the permeability of the laminated sheet (i.e., the mask filter). Among these various modes, point adhesion mode, line adhesion mode and combination thereof are preferably adopted since the lamination can be achieved without adversely affecting the permeability.

When the heat-embossing technique is adopted in a linear fusion mode, an embossing temperature in a range of 100 to 140°C, a linear pressure in a range of 20 to 60 kg/cm and a pressure bonding area in a range of 1 to 25% are preferably adopted.

The laminated sheet forming the mask filter of the present invention may be produced, for example, by placing all components of the laminated sheet, i.e., the sheet(s) and the nonwoven fabric layers one upon another in a predetermined sequence and laminating them at once using the heat-embossing process or hot melt adhesive or by previously laminating and bonding two components of three or more sheet(s) and the nonwoven fabric layers and then by laminating and bonding the remaining sheet(s) and/or the nonwoven fabric layer.

In the case of the laminated sheet containing the polyolefin fiber sheets (III) respectively sandwiched between the polyolefin fiber sheet (I) as the core layer and the dry nonwoven fabric layers (II) defining the innermost and outermost layers, the components of the mask filter are laminated and bonded together preferably in a manner as follows: The previously prepared polyolefin fiber sheet (III) is continuously fed to the apparatus (e.g., melt blow apparatus) for forming the polyolefin fiber sheet (I). Simultaneously, the polyolefin resin composition containing the inorganic antimicrobial agent particles and adapted to form the polyolefin fiber sheet (I) is discharged, for example, by so-called melt blow process onto the polyolefin fiber sheet (III) to form the polyolefin fiber composite sheet comprising the polyolefin fiber sheet (I) (nonwoven fabric) laminated on the polyolefin fiber sheet (III). Finally, the dry nonwoven fabric layers (II) are placed on the both surfaces of the polyolefin fiber composite fiber sheet to form the laminated sheet.

The mask produced using the mask filter according to the present invention is not limited to particular shape and construction so far as the mask filter of the present invention is used as the component used to cover the wearer's mouth and nasal apertures.

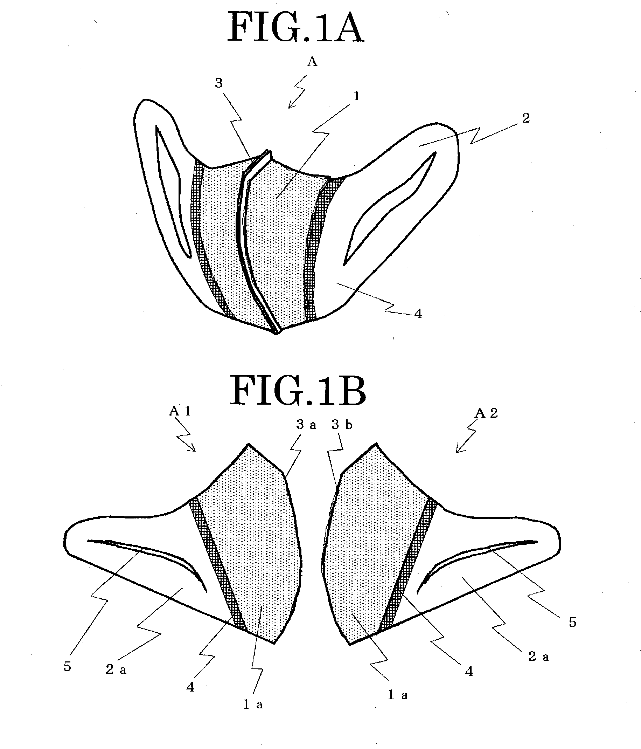

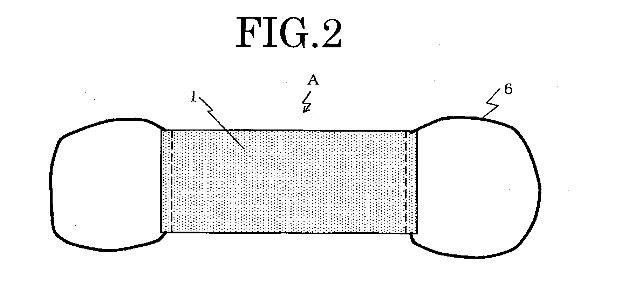

Without limiting the invention, Figs. 1 and 2 schematically illustrate particular examples of the mask produced using the mask filter according to the present invention.

A mask A illustrated in Fig. 1A includes a covering region 1 for the wearer's mouth and nasal apertures defined by the mask filter of the present invention and ear encircling regions 2 made of, for example, separately prepared elasticized nonwoven fabric.

Halves $A_1$, $A_2$ of mask illustrated by Fig. 1B may be jointed together along respective inner side edges 3a, 3b opposed to each other to define a joint 3 as seen in Fig. 1A. Each of respective halves $A_1$, $A_2$ of the mask illustrated by Fig. 1B is obtained by joining the mask filter 1a of the invention to the separately prepared elasticized nonwoven fabric 2a and then cutting this assembly into a shape as seen in Fig. 1B. Referring to Fig. 1B, reference numeral 4 designates a joint between the mask filter 1a and the nonwoven fabric 2a, and reference numeral 5 designates a slit (for insertion of wearer's ear) formed in the nonwoven fabric 2a defining the ear encircling region 2.

In another embodiment of the mask A illustrated by Fig. 2, the covering region 1 for the wearer's mouth and nasal aperture is provided on transversely opposite side edges with ear encircling cords 2c, respectively.

In both the mask illustrated in Fig. 1 and the mask illustrated by Fig. 2, unique construction of the covering region 1 for the wearer's mouth and nasal apertures provides a high antimicrobial/antiviral activity, a high dust filtration performance and a comfortable feeling to wear rather than a feeling of smothering. More specifically, the covering region for wearer's mouth and nasal apertures is formed by the mask filter according to the invention defined by a laminated sheet consisting of the polyolefin fiber sheet (I) as the core layer on the surface of which a number of the inorganic antimicrobial agent particles are exposed and the dry nonwoven fabric layers (II) sandwiching the core layer (I).

EXAMPLES

Details of the present invention will be more fully understood from the description of several examples and controls given hereunder. It should be appreciated, however, that the present invention is not limited to these examples and controls. Physical values in the examples and controls described hereunder were obtained by methods of measurement as will be described below.

(1) Melt flow rate(MFR) of polyolefin:

Using the MFR measuring apparatus ("L244" manufactured by TAKARA INDUSTRY Co., Ltd.), melt flow rates (MFR) (g/10 min) of the polyolefin used by the following examples and controls were measured at a temperature of 230°C, under a load of 2.16 kg for 10 minutes.

(2) Average particle diameter of the inorganic antimicrobial agent particles:

(i) The inorganic antimicrobial agent particles (silver-based inorganic antimicrobial agent particles) used in the following examples and controls were added with water, adequately stirred and homogeneously dispersed in water.
(ii) Dispersion liquid obtained in the step (i) was used to analyze a particle size distribution by the laser diffraction scattering particle size measuring apparatus ("LA-920" manufactured by Horiba, Ltd.)

Prior to the measurement, the particles were treated with ultrasonic wave for 1 min by the built-in ultrasonic homogenizer and a mathematic mean value($\mu$m) calculated on the basis of a particle distribution by volume was obtained as the average particle diameter of the inorganic antimicrobial agent particles.

(3) Average fiber diameter of the polyolefin fiber constituting polyolefin fiber sheet:

Test specimens (5 cm $\times$ 5 cm) were collected from the respective polyolefin fiber sheets and, for each of these test specimens, 1000 magnification photo of a middle zone (a zone about the intersecting point of diagonals) on the surface of the specimen was taken using the scanning electron microscope(SEM). A circle having a radius of 15 cm was drawn on the photo around the middle zone (intersection of diagonals) and fiber diameters of all the non-fused polyolefin fibers (normally about 50 to 100 fibers) were measured at the respective longitudinal middles or in the vicinity thereof using a vernier caliper. The measured fiber diameters were averaged to obtain the average fiber diameter ($\mu$m) of the polyolefin fiber.

It should be appreciated that we obtained the average fiber diameter on the basis of all the polyolefin fibers appearing in the SEM photograph without distinguishing the fiber lying on the outermost surfaces of the polyolefin fibers from the fibers lying in the core.

(4) Measurement of the number of spots in which the inorganic antimicrobial agent particles are exposed on the polyolefin fiber sheet surface:

(i) The number of the 1/100 or more of the individual inorganic antimicrobial agent particles exposed spots:

Test specimens (5 cm x5 cm) were collected from the respective electret-processed polyolefin fiber sheets and, for each of these test specimens, 2000 magnification photo of a middle zone (a zone about the intersecting point of diagonals) on the surface of the specimen was taken using the scanning electron microscope (SEM) . A square 14 cm on a side (a square 100$\mu$m on a side in the polyolefin fiber sheet) was drawn on the photo around the middle zone (intersection of diagonals) and a spot in which the inorganic antimicrobial agent particles are exposed on the polyolefin fiber surface was picked up and a diameter of this spot was measured. Of these spots, the number of spots in which 1/100 or more of the inorganic antimicrobial agent particles is exposed were summed up and, of the summed up number, the number of the 1/100 or more of the individual inorganic antimicrobial agent particles exposed spots per $1.0 \times 10^{-2}$ mm$^2$ was counted. Ten test specimens were prepared and such measurement was conducted ten times and the average value was obtained based on these ten times repeated measurements.

It should be appreciated that, when the inorganic antimicrobial agent particles contained in the polyolefin fiber were, for example, spherical fine particles each having an average particle diameter of 2.5 $\mu$m, a region in which the inorganic antimicrobial agent particle is exposed on the photo in the form of a circle having a diameter of 0.13 $\mu$m or larger corresponds to the 1/100 or more of the individual inorganic antimicrobial agent particles exposed spots (the spherical inorganic antimicrobial agent particles each having an average particle diameter of 2.5 $\mu$m were used in EXAMPLE 2 as will be described later).

(ii) The number of spots in which the inorganic antimicrobial agent particles are exposed in an area of 0.01 $\mu$m$^2$ or larger:

After the dimension and the number of the spots in which the 1/100 or more of the inorganic antimicrobial agent particles are exposed were determined in the step (i), the spots in which the inorganic antimicrobial agent particles are exposed on the polyolefin fiber surfaces were picked up and areas of these respective spots on the SEM photos were measured in the measured ranges (the measured regions corresponding to those in the step (i)). Thus the number of the spots in which the inorganic antimicrobial agent particles are exposed over an area of 0.01 $\mu$m$^2$ or larger were counted and "the number of the spots in which the inorganic antimicrobial agent particles are exposed over an area of 0.01 $\mu$m$^2$" per $1.0 \times 10^{-2}$ mm$^2$ of the polyolefin fiber sheet were obtained. Ten test specimens were prepared and the same measurement was repeated ten times to obtain the average value.

The area of the spot in which the inorganic antimicrobial agent particles are exposed on the polyolefin fiber surface can be measured, for example, by accurately cutting the spot of the SEM photo in which the inorganic antimicrobial agent particles appear to be exposed off, then a weight (wb) of this cut away piece is measured and by measuring a weight (wa) of a reference area S (e.g., area of the square of 10 $\mu$m $\times$ 10$\mu$m) of the test specimen appearing in the SEM photo. Then, this area can be obtained from the following formula:

Area of exposed inorganic antimicrobial agent particles

$$= S \times (wb/wa) \qquad\qquad (2)$$

(5) Permeability of the polyolefin fiber sheet and the mask filter:

Permeability was measured by Fraj our method in accordance with JIS L 1096.

(6) Antimicrobial activity test (biocidal activity value) :

On the mask filters obtained as the examples and the controls as will be described later, the antimicrobial activity test was conducted in accordance with JIS L 1902 "Antimicrobial Activity Test Method for Fibrous Articles" and biocidal activity values were measured. Higher the biocidal activity is, the inorganic antimicrobial agent particles exhibit correspondingly higher antimicrobial effect.

The test was conducted under following conditions:

- Condition of bacteria emulsion: 1/20NB(normally bouillon), 0.2 ml
- Condition of acting: 37°C, 18 hrs
- Bacterial strain: Klebsiella pneumoniae
- Biocidal activity value: differential number of living microbes before and after acting period represented in logarithm

Biocidal activity value = Log(number of living microbes immediately after acting/number of living microbes after Acting)

(7) Antiviral activity test conducted on the mask filter:

On the mask filters obtained as the examples and the controls as will be described later, antiviral test was conducted in accordance with JIS Z 2801 "Antimicrobial-processed article-Antimicrobial activity test".
The test was conducted under following conditions.

- Bacterial strain: Influenza A virus (A/New caledonia/20/99)
- Condition of bacteria emulsion: quantity of acting virus 0.2 ml
- Condition of acting: 25°C, 24 hrs
- Effect evaluation: virus infectivity titer of 10% or lower of the initial infectivity titer was evaluated to be "effective" and virus infectivity titer higher than 10% was evaluated to be "ineffective".

(8) Dust filtration performance (dust trapping performance) of the mask filter:

(i) Circular test specimens each having a diameter of 110 mm were collected from the mask filters as the examples and the controls as will be described later and each of these test specimens was attached to the measurement cell (having a diameter of filtering area = 85 mm) of the dust filtration performance measuring apparatus ("AP6310FP" manufactured by SIBATA SCIENTIFIC TECHNOLOGY LTD).
(ii) Silica dust having a diameter of $2\mu m$ or less and a quantity-average particle diameter of $0.5\ \mu m$ was used as dust for testing to prepare dust containing air exhibiting a silica dust concentration of $30 \pm 5$ mg/m$^2$.
(iii) The air containing silica dust prepared in the step (ii) was fed into the measurement cell set in the step (i) at a flow rate of 30L/min so that a dust concentration on upstream of the cell and a dust concentration on downstream of the cell may be measured by a detector based on light scattering/light quantity integration.
(iv) A dust trapping performance(%) was calculated by a following formula (3) in which D1 represents a dust concentration on upstream of the cell and D2 represents a dust concentration on downstream of the cell measured in the sptep (iii) :

$$\text{Dust trapping rate (\%)} = \{(D1 - D2)/D1\} \times 100 \quad (3)$$

«EXAMPLE 1»

(1) Production of the electret-processed antimicrobial polyolefin fiber sheet (I):

(i) 20 parts by mass of silver-based inorganic antimicrobial agent particles consisting of silver ions supported by inorganic ion exchanger primarily formed by zirconium phosphate (substantially cubic particles "NOVARONAG 300"having an average particle size of 1 $\mu$m, available from Toagosei Co., Ltd.) were mixed into 80 parts by mass of polypropylene(A)(MFR = 300 g/10 min) to obtain master batch containing the silver-based inorganic antimicrobial agent particles.

(ii) The master batch prepared in the step (i) was mixed with polypropylene (B) (MFR = 700 g/10 min) at a mass ratio of master batch : polypropylene = 1 : 9. Using a melt blowing equipment of conventional type, this mixture was melt blow spun under conditions: spinning temperature of 280°C, air temperature of 290°C, air pressure of 1.2 kg/cm$^2$, discharge rate of 0.4 g/nozzle·min, trapping distance of 30 cm, and 2850 spinning nozzles formed through a ferrule and arranged on a line to obtain the antimicrobial polyolefin fiber sheet (I).

(iii) Using the electret-processing equipment of conventional type, the antimicrobial polyolefin fiber sheet (I) obtained in the step (ii) was electret-processed under conditions: use of needle electrodes, electrode distance = 25 mm, applied voltage of -25 kV and a temperature of 80°C to obtain the charged antimicrobial polyolefin fiber sheet (I).

(iv) The electret-processed antimicrobial polyolefin fiber sheet (I) obtained in the step (iii) had basis weight of 18 g/m$^2$ and permeability of 100 cc/cm$^2$/sec as measured by Fraj our method. Average fiber diameter of the polyolefin fiber constituting this polyolefin fiber sheet (I) was 3.6 $\mu$m. The number of the spots in which the inorganic antimicrobial agent particles were exposed over the area of 0.01 $\mu$m$^2$ or larger on the polyolefin fiber surface was 1.2 per 1.0 x 10$^{-2}$ mm$^2$ of the fiber sheet surface as counted by the above-mentioned method.

(2) Production of the mask filter

(i) Thermal bond nonwoven fabric (core-sheath type composite short fiber sheet of which the core component was made of polyethylene terephthalate and the sheath component was made of polyethylene; basis weight = 32 g/m$^2$) was placed, as the outer surface material of the mask, on one of the opposite surfaces of the charged antimicrobial polyolefin fiber sheet (I) obtained in the stage (1) and the thermal bond nonwoven fabric same as the outer surface material was placed on the other surface of the polyolefin fiber sheet as the mouth covering material. These components placed one upon another in this manner were then heat-embossed at a temperature of 135°C under a linear pressure of 40 kg/cm to obtain a mask filter defined by three layered laminated sheet in which the thermal bond nonwoven fabric/the charged antimicrobial polyolefin fiber sheet (I)/the thermal bond nonwoven fabric are fusion bonded together along a plurality of vertically extending fusion stripes each having a width of 0.3 mm and spaced one from another by 3 mm (fusion bonded area: 10%).

(ii) Basis weight of the mask filter obtained in the step (i) was 82 g/m$^2$ and permeability as measured by the Frajour method was as high as 40 cc/cm$^2$/sec.

From result of the antimicrobial activity test and the antiviral activity test conducted on this mask filter using the above-mentioned method, it was found that this mask filter exhibits high antimicrobial activity as well as high antiviral activity, as will be apparent from TABLE 1 displayed below.

From result of the dust filtration performance test conducted on this mask filter using above-mentioned method, it was fount that this mask filter exhibits high dust trapping rate as well as high dust filtration performance, as will be apparent from TABLE 1 displayed below.

«EXAMPLE 2»

(1) Production of the electret-processed antimicrobial polyolefin fiber composite sheet:

(i) Using a melt blowing equipment of conventional type, polypropylene (MFR = 700 g/10 min) was melt blow spun under conditions: spinning temperature of 250°C, air temperature of 260°C, air pressure of 0.8 kg/cm$^2$, discharge rate of 0.5 g/nozzle·min, trapping distance of 35 cm, and 2850 spinning nozzles (arranged on a line) formed through a ferrule to obtain melt blow nonwoven fabric ($\alpha$) of low density polypropylene [corresponding to the polyolefin fiber sheet(III)]. Basis weight of this melt blow nonwoven fabric ($\alpha$) was 10 g/m$^2$ and permeability thereof was 250 cc/cm$^2$/sec as measured by the Frajour method. The average fiber diameter of the polypropylene fiber constituting this melt blow nonwoven fabric ($\alpha$) was 4.8 $\mu$m. the antimicrobial polyolefin fiber sheet(I).
(ii)

(a) 20 parts by mass of silver-based inorganic antimicrobial agent particles consisting of silver ions supported by inorganic ion exchanger primarily formed by zirconium phosphate (substantially cubic particles "NOVARONAG 300" having an average particle size of 1 $\mu$m, available from Toagosei Co., Ltd.) were mixed into 80 parts by mass of polypropylene (A) (MFR = 300 g/10 min) to obtain master batch containing the silver-based inorganic antimicrobial agent particles.
(b) The master batch prepared in the step (a) was mixed with polypropylene (B) (MFR = 700 g/10 min) at a mass ratio of master batch : polypropylene = 1 : 9. Using a melt blowing equipment of conventional type, this mixture was melt blow spun under conditions: spinning temperature of 210°C, air temperature of 220°C, air pressure of 0.9 kg/cm$^2$, discharge rate of 0.1 g/nozzle·min, trapping distance of 16 cm, and 2850 spinning nozzles formed through a ferrule and arranged on a line directly onto the melt blow nonwoven fabric ($\alpha$) prepared in the step(i). In this way, two layered antimicrobial polyolefin fiber composite sheet consisting of the melt blow nonwoven fabric made of the polypropylene fiber containing the silver-based inorganic antimicrobial agent particles [corresponding to the polyolefin fiber sheet (I)] laminated on and fusion bonded to the melt blow nonwoven fabric ($\alpha$) made of polypropylene fiber containing none of the silver-based inorganic antimicrobial agent particles [corresponding to the polyolefin fiber sheet(III)]. In the two-layered polyolefin fiber composite sheet obtained in this manner, basis weight of the polyolefin nonwoven fabric made of polypropylene fiber containing the silver-based inorganic antimicrobial agent particles [corresponding to the polyolefin fiber sheet(I)] was 6 g/m$^2$ and basis weight of this two-layered polyolefin fiber composite sheet as a whole was 16 g/m$^2$.

(iii) Using the same electret-processing equipment as that used in EXAMPLE 1, the two-layered polyolefin fiber composite sheet obtained in the step (ii) was electret-processed under conditions: use of needle electrodes, electrode distance of 25 mm, applied voltage of -25 kV, temperature of 80°C and the nonwoven fabric layer made of polypropylene fiber containing the silver-based inorganic antimicrobial agent particles [corresponding to the polyolefin fiber sheet (I)] of the polyolefin fiber composite sheet being placed on the side of the needle electrodes to obtain an antimicrobial charged polyolefin fiber composite sheet.
(iv) Basis weight of the antimicrobial charged polyolefin fiber composite sheet obtained in the step (iii) was 16 g/m$^2$ and permeability thereof was 123 cc/cm$^2$/sec. The average fiber diameter of the polypropylene fiber containing the silver-based antimicrobial agent particles and constituting the melt blow nonwoven fabric layer [corresponding to the polyolefin fiber sheet (I)] was 1.2 $\mu$m and the number of the spots in which the inorganic antimicrobial agent particles are exposed on the melt blow nonwoven fabric layer surface over an area of 0.01 $\mu$m$^2$ or larger was 1.5 per 1.0 $\times$ 10$^{-2}$ mm$^2$ as measured and counted by the above-mentioned method.

(2) Production of the mask filter:

(i) Thermal bond nonwoven fabric (core-sheath type composite short fiber sheet of which the core component was made of polyethylene terephthalate and the sheath component was made of polyethylene; basis weight = 32 g/m$^2$) was placed, as the outer surface material of the mask, on one of the opposite surfaces of the charged antimicrobial polyolefin fiber composite sheet obtained in the stage (1) and the thermal bond nonwoven fabric same as the outer surface material was placed on the other surface of the polyolefin fiber composite sheet as the mouth covering material. These components placed one upon another in this manner were then heat-embossed at a temperature of 135°C under a linear pressure of 40 kg/cm to obtain a mask filter defined by three layered laminated sheet in which the thermal bond nonwoven fabric/the charged antimicrobial polyolefin fiber composite sheet/the thermal bond nonwoven fabric are fusion bonded together along a plurality of vertically extending fusion stripes each having a width of 0.3 mm and spaced one from another by 3 mm (fusion bonded area: 10%).

(ii) Basis weight of the mask filter obtained in the step (i) was 80 g/m$^2$ and permeability as measured by the Frajour method was as high as 50 cc/cm$^2$/sec.

From result of the antimicrobial activity test and the antiviral activity test conducted on this mask filter using the above-mentioned method, it was found that this mask filter exhibits high antimicrobial activity as well as high antiviral activity, as will be apparent from TABLE 1 displayed below.

From result of the dust filtration performance test conducted on this mask filter using above-mentioned method, it was fount that this mask filter exhibits high dust trapping rate as well as high dust filtration performance, as will be apparent from TABLE 1 displayed below.

«EXAMPLE 3»

(1) Production of electret-processed antimicrobial polyolefin fiber composite sheet:

(i) Spun bond nonwoven fabric (basis weight = 20 g/m$^2$, permeability = 350 cc/cm$^2$/sec) [corresponding to the polyolefin fiber sheet (III)] made of polypropylene fiber was prepared.

(ii) 20 parts by mass of silver-based inorganic antimicrobial agent particles consisting of silver ions supported by zeolite ("ZEOMIC" available from SINANEN ZEOMIC, substantially spheric particles having an average particle diameter of 2.5 $\mu$m) were mixed into 80 parts by mass of polypropylene (A) (MFR = 100 g/10 min) to obtain master batch containing the silver-based inorganic antimicrobial agent particles.

(iii) The master batch prepared in the step (ii) was mixed with polypropylene (B) (MFR = 600 g/10 min) at a mass ratio of master batch : polypropylene = 1 : 9. Using the same melt blowing equipment as used for EXAMPLE 1, this mixture was melt blow spun under conditions: spinning temperature of 210°C, air temperature of 220°C, air pressure of 0.9 kg/cm$^2$, discharge rate of 0.1 g/nozzle·min, trapping distance of 16 cm, and 2850 spinning nozzles formed through a ferrule and arranged on a line directly onto spun bond nonwoven fabric prepared in the step (i) being continuously fed from behind the melt blowing equipment. In this way, two layered antimicrobial polyolefin fiber composite sheet consisting of the melt blow nonwoven fabric made of the polypropylene fiber containing the silver-based inorganic antimicrobial agent particles [corresponding to the polyolefin fiber sheet (I) laminated on and fusion bonded to the spun bond nonwoven fabric. In the two-layered polyolefin fiber composite sheet obtained in this manner, basis weight of the polyolefin nonwoven fabric part made of polypropylene fiber containing the silver-based inorganic antimicrobial agent particles [corresponding to the polyolefin fiber sheet (I)] was 6 g/m$^2$ and basis weight of this two-layered polyolefin fiber composite sheet as a whole was 26 g/m$^2$.

(iv) Using the same electret-processing equipment as that used in EXAMPLE 1, the two-layered polyolefin fiber composite sheet obtained in the step (iii) was electret-processed under conditions: use of needle electrodes, electrode distance of 30 mm, applied voltage of -27 kV, temperature of 80°C and the nonwoven fabric layer made of polypropylene fibers containing the silver-based inorganic antimicrobial agent particles [corresponding to the polyolefin fiber sheet (I)] of the polyolefin fiber composite sheet being placed on the side of the needle electrodes to obtain an antimicrobial charged polyolefin fiber composite sheet.

(v) Basis weight of the antimicrobial charged polyolefin fiber composite sheet obtained in the step (iv) was 26 g/m$^2$ and permeability thereof was 136 cc/cm$^2$/sec. The average fiber diameter of the polypropylene fiber containing the silver-based antimicrobial agent particles and constituting the melt blow nonwoven fabric layer [corresponding to the polyolefin fiber sheet (I)] was 1.2 $\mu$m and the number of the spots in which the the inorganic antimicrobial agent particles contained in the melt blow nonwoven fabric layer are exposed on the polyolefin fiber surface over an area of 0.01 $\mu$m$^2$ or larger was 4.9 per $1.0 \times 10^{-2}$ mm$^2$ as a result of the above-mentioned measuring and counting method. The number of the 1/100 or more of the individual inorganic antimicrobial agent particles exposed spots on the fiber surface was 4.5 per $1.0 \times 10^{-2}$ mm$^2$ of the fiber surface as a result of the above-mentioned measuring and counting method.

(2) Production of the mask filter:

(i) Thermal bond nonwoven fabric (core-sheath type composite short fiber sheet of which the core component was made of polyethylene terephthalate and the sheath component was made of polyethylene; basis weight = 32 g/m$^2$) was placed, as the outer surface material of the mask, on one of the opposite surfaces of the charged antimicrobial polyolefin fiber composite sheet (I) obtained in the stage (1) and the thermal bond nonwoven fabric same as the outer surface material was placed on the other surface of the polyolefin fiber composite sheet as the mouth covering material. These components placed one upon another in this manner were then heat-embossed at a temperature of 135°C under a linear pressure of 40 kg/cm to obtain a mask filter defined by three layered laminated sheet in which the thermal bond nonwoven fabric/the charged antimicrobial polyolefin fiber composite sheet/the thermal bond nonwoven fabric are fusion bonded together along a plurality of vertically extending fusion stripes each having a width of 0.3 mm and spaced one from another by 3 mm (fusion bonded area: 10%).
(ii) Basis weight of the mask filter obtained in the step (i) was 90 g/m$^2$ and permeability as measured by the Frajour method was as high as 55 cc/cm$^2$/sec.

From result of the antimicrobial activity test and the antiviral activity test conducted on this mask filter using the above-mentioned method, it was found that this mask filter exhibits high antimicrobial activity as well as high antiviral activity, as will be apparent from TABLE 1 displayed below.
From result of the dust filtration performance test conducted on this mask filter using above-mentioned method, it was fount that this mask filter exhibits high dust trapping rate as well as high dust filtration performance, as will be apparent from TABLE 1 displayed below.

«EXAMPLE 4»

(1) A mask filter (laminated sheet) was made in the same manner as in Example 1 except that, in the step (i) of the stage (2) for EXAMPLE 1, the thermal bond nonwoven fabric used as the mask covering material was replaced by spun bond nonwoven fabric (having basis weight of 25 g/m$^2$).
(2) Basis weight of the mask filter (laminated sheet) obtained in the stage (1) was 68 g/m$^2$ and permeability as measured by the Frajour method was as high as 60 cc/cm$^2$/sec.

From result of the antimicrobial activity test and the antiviral activity test conducted on this mask filter using the above-mentioned method, it was found that this mask filter exhibits high antimicrobial activity as well as high antiviral activity, as will be apparent from TABLE 1 displayed below.
From result of the dust filtration performance test conducted on this mask filter using above-mentioned method, it was fount that this mask filter exhibits high dust trapping rate as well as high dust filtration performance, as will be apparent from TABLE 1 displayed below.

«CONTROL 1»

(1) Production of the electret-processed polyolefin fiber sheet:

(i) Using the melt blowing equipment of conventional type, polypropylene (MFR = 700 g/10 min) was melt blow spun under conditions: spinning temperature of 275°C, air temperature of 285°C, air pressure of 1.0 kg/cm$^2$, discharge rate of 0.4 g/nozzle·min, trapping distance of 30 cm, and 2850 spinning nozzles (arranged on a line) formed through a ferrule to obtain melt blow nonwoven fabric of polypropylene (corresponding to the polyolefin fiber sheet).
(ii) Using the same electret-processing equipment as used for EXAMPLE 1, the polyolefin fiber sheet (melt blow nonwoven fabric made of polypropylene) obtained in the step(i) was electret-processed under conditions: use of needle electrodes, electrode distance = 25 mm, applied voltage of -25 kV and a temperature of 80°C to obtain the charged polyolefin fiber sheet.
(iii) The charged polyolefin fiber sheet obtained in the step (ii) had a basis weight of 20 g/m$^2$, permeability of

72 cc/cm$^2$/sec, and average fiber diameter of 3.5 $\mu$m.

(2) Production of the mask filter:

(i) The same thermal bond nonwoven fabric as that used on the stage (2) of EXAMPLE 1 was placed, as the outer surface material of the mask, on one of the opposite surfaces of the charged antimicrobial polyolefin fiber sheet electret-processed in the stage (1) and the thermal bond nonwoven fabric same as the outer surface material was placed on the other surface of the polyolefin fiber sheet as the mouth covering material. These components placed one upon another in this manner were then heat-embossed at a temperature of 135°C under a linear pressure of 40 kg/cm to obtain a mask filter defined by three layered laminated sheet in which the thermal bond nonwoven fabric/the charged antimicrobial polyolefin fiber sheet/the thermal bond nonwoven fabric are fusion bonded together along a plurality of vertically extending fusion stripes each having a width of 0.3 mm and spaced one from another by 3 mm (fusion bonded area: 10%).
(ii) Basis weight of the mask filter (laminated sheet) obtained in the step (i) was 84 g/m$^2$ and permeability as measured by the Frajour method was as high as 30 cc/cm$^2$/sec.

From result of the antimicrobial activity test and the antiviral activity test conducted on this mask filter using the above-mentioned method, it was found that this mask filter exhibits no significant antimicrobial activity as well as antiviral activity, as will be apparent from TABLE 1 displayed below.
From result of the dust filtration performance test conducted on this mask filter using above-mentioned method, it was fount that this mask filter exhibits a degree of dust trapping rate as well as a degree of dust filtration performance as indicated in TABLE 1 displayed below.

«CONTROL 2»

(1) Production of the electret-processed polyolefin fiber sheet:

(i) 20 parts by mass of silver-based inorganic antimicrobial agent particles consisting of silver ions supported by inorganic ion exchanger primarily formed by zirconium phosphate (substantially cubic particles "NOVARON AG 300" having an average particle size of 1 $\mu$m, available from Toagosei Co., Ltd.) were mixed into 80 parts by mass of polypropylene (A) (MFR = 45 g/10 min) to obtain master batch containing the silver-based inorganic antimicrobial agent particles.
(ii) The master batch prepared in the step (i) was mixed with polypropylene (B) (MFR = 700 g/10 min) at a mass ratio of master batch : polypropylene = 1 : 9. Using a melt blowing equipment of conventional type, this mixture was melt blow spun under conditions: spinning temperature of 280°C, air temperature of 295°C, air pressure of 1.2 kg/cm$^2$, discharge rate of 0.4 g/nozzle·min, trapping distance of 30 cm, and 2850 spinning nozzles formed through a ferrule and arranged on a line to obtain the polyolefin fiber sheet.
(iii) Using the same electret-processing equipment as used for EXAMPLE 1, the polyolefin fiber sheet obtaind in the step (ii) was electret-processed under conditions: use of needle electrodes, electrode distance = 25 mm, applied voltage = -25kV and temperature of 80°C to obtain charged polyolefin fiber sheet.
(iv) Basis weight of the charged polyolefin fiber sheet obtained in the step (iii) was 18 g/m$^2$ and permeability thereof was 98 cc/cm$^2$/sec as measured by the Frajour method. The average fiber diameter of the polypropylene fiber constituting this polyolefin fiber sheet was 3.8 $\mu$m. The number of the regions in which the inorganic antimicrobial agent particles are exposed on this polyolefin fiber sheet (I) over an area of 0.01$\mu$m2 or larger was 0.4 per 1.0 $\times$ 10$^{-2}$ mm$^2$ of the fiber sheet surface as measured and counted by the above-mentioned method.

(2) Production of the mask filter:

(i) The same thermal bond nonwoven fabric as used in the step (i) of the stage (2) of EXAMPLE 1 was placed, as the outer surface material of the mask, on one of the opposite surfaces of the charged antimicrobial polyolefin fiber sheet obtained in the stage (1) and the same thermal bond nonwoven fabric as used the outer surface material was placed on the other surface of the polyolefin fiber sheet as the mouth covering material. These components placed one upon another in this manner were then heat-embossed at a temperature of 135°C under a linear pressure of 40 kg/cm to obtain a mask filter defined by three layered laminated sheet in which the thermal bond nonwoven fabric/the charged polyolefin fiber sheet/the thermal bond nonwoven fabric are fusion bonded together along a plurality of vertically extending fusion stripes each having a width of 0.3 mm and spaced one from another by 3 mm (fusion bonded area: 10%) .

(ii) Basis weight of the mask filter obtained in the step (i) was 82 g/m$^2$ and permeability thereof was 38 cc/cm$^2$/sec as measured by the Frajour method.

The antimicrobial activity test and the antiviral activity test were conducted on this mask filter by the above-mentioned method and it was found that the antimicrobial activity as well as the antiviral activity of this mask filter is relatively poor as indicated in TABLE 1 displayed below.

The dust filtration performance test also was conducted on this mask filter and the result as indicated in TABLE 1 was obtained.

«CONTROL 3»

(1) Production of the electret-processed antimicrobial polyolefin fiber composite sheet:

(i) Using the melt blowing equipment of conventional type, polypropylene (MFR = 700 g/10 min) was melt spun under conditions: spinning temperature of 275°C, air temperature of 285°C, air pressure of 1.0 kg/cm$^2$, discharge rate of 0.4 g/nozzle·min, trapping distance of 30 cm and 2850 nozzles (arranged in a line) formed through ferrule wall to obtain melt blow nonwoven fabric of polypropylene ($\alpha$) [corresponding to the polyolefin fiber sheet (III)]. Basis weight of this melt blow nonwoven fabric ($\alpha$) was 18 g/m$^2$.

(ii) Using a corona treater of conventional type, the melt blow nonwoven fabric ($\alpha$) obtained in the step (i) was corona treated under conditions: treating speed of 4 m/min, power of 3 kW and discharge rate of 1.8 w/cm$^2$ to achieve a wetting tension of 44 mN/m.

(iii) The silver-based inorganic antimicrobial agent particles having silver ions supported by inorganic ion exchanger primarily formed by zirconium phosphate ("NOVARON AG300", substantially cubic particles having average particle diameter of 1 $\mu$m, available from Toagoesei Co., Ltd.) are mixed into commercially available aqueous acrylic binder so that these particles may occupy 20 parts by weight in the mixture. The mixture was stirred for a period sufficient to disperse the antimicrobial agent in the mixture. The melt blow nonwoven fabric ($\alpha$) obtained in the step (ii) was impregnated with the binder containing the antimicrobial agent up to a pick-up rate of 11% whereupon the melt blow nonwoven fabric was subjected to nipping treatment and then dried by heating at 120°C to obtain the polyolefin fiber sheet.

(iv) Using the same electret-processing equipment as used for EXAMPLE 1, the antimicrobial polyolefin fiber sheet obtained in the step (iii) was electret-processed under conditions: use of needle electrodes, electrode distance of 25 mm, applied voltage of -15 kV and temperature of 80°C to obtain the antimicrobial charged polyolefin fiber sheet.

(v) The antimicrobial charged polyolefin fiber sheet obtained in the step (iv) had a basis weight of 20 g/m$^2$ and permeability of 48 cc/cm$^2$/sec as measured by the Frajour method. Average fiber diameter of the polyolefin fiber constituting the polyolefin fiber sheet was 4.2 $\mu$m.

(2) Production of the mask filter:

(i) The same thermal bond nonwoven fabric as that used on the stage (2) of EXAMPLE 1 was placed, as the outer surface material of the mask, on one of the opposite surfaces of the charged antimicrobial polyolefin fiber sheet electret-processed in the stage (1) and the thermal bond nonwoven fabric same as the outer surface material was placed on the other surface of the polyolefin fiber sheet as the mouth covering material. These components placed one upon another in this manner were then heat-embossed at a temperature of 135°C under a linear pressure of 40 kg/cm to obtain a mask filter defined by three layered laminated sheet in which the thermal bond nonwoven fabric/the charged antimicrobial polyolefin fiber sheet/the thermal bond nonwoven fabric are fusion bonded together along a plurality of vertically extending fusion stripes each having a width of 0.3 mm and spaced one from another by 3 mm (fusion bonded area: 10%).

(ii) Basis weight of the mask filter (laminated sheet) obtained in the step (ii) was 84 g/m$^2$ and permeability as

measured by the Frajour method was as high as 20 cc/cm$^2$/sec.

The antimicrobial activity test and the antiviral activity test were conducted on this mask filter using the above-mentioned method, it was found that this mask filter exhibits values as will be apparent from TABLE 1 displayed below.

The dust filtration performance test was conducted this mask filter using above-mentioned method and it was found that this mask filter exhibits a relatively low dust trapping rate and a poor dust filtration performance as indicated in TABLE 1 displayed below.

[TABLE 1]

| | Ex.1 | Ex.2 | Ex.3 | Ex.4 | Con.1 | Con.2 | Con.3 |
|---|---|---|---|---|---|---|---|
| [polyolefin fiber (composite) sheet] Type[1] | A | B | C | A | D | E | F |
| basis weight(g/m$^2$) | 18 | 16 | 26 | 18 | 20 | 18 | 20 |
| av. fiber diameter($\mu$m) | 3.6 | 1.2 | 1.2 | 3.6 | 3.5 | 3.8 | 4.2 |
| av.particle diameter of antimicrobial agent particle diameter($\mu$m) | 1 | 1 | 2.5 | 1 | - | 1 | 1 |
| number of 1/100 or more by volume exposed spots[2] (spot/$1.0\times10^{-2}$mm$^2$) | - | - | 4.5 | - | 0 | - | - |
| number of exposed spots each occupying area of 0.01 $\mu$m$^2$ or larger[3] (spot/$1.0\times10^{-2}$mm$^2$) | 1.2 | 1.5 | 4.9 | 1.2 | 0 | 0.4 | - |
| permeability(cc/cm$^2$/sec) | 100 | 123 | 136 | 100 | 72 | 98 | 48 |
| [mask filter (laminated sheet)]<br>layer structure<br>surface layer (outer surface material)[4]<br>core layer[1]<br>surface layer (mouth-covering material)[4] | TB<br>A<br>TB | TB<br>B<br>TB | TB<br>C<br>TB | SB<br>A<br>SB | TB<br>D<br>TB | TB<br>E<br>TB | TB<br>F<br>TB |
| physicality·& capability: basis weight(g/m$^2$) | 82 | 80 | 90 | 84 | 84 | 82 | 84 |
| permeability (cc/cm$^2$/sec) | 40 | 50 | 55 | 30 | 30 | 38 | 20 |
| antimicrobial activity test (biocidal activity) | >3.3 | >3.3 | >3.3 | >3.3 | 0 | 2.2 | >3.3 |
| antiviral test (positive or negative) | + | + | + | + | - | - | + |

(continued)

|  | Ex.1 | Ex.2 | Ex.3 | Ex.4 | Con.1 | Con.2 | Con.3 |
|---|---|---|---|---|---|---|---|
| dust filtration ability (dust trapping rate %) | 89 | 91 | 91 | 90 | 92 | 88 | 42 |

1) Types of polyolefin fiber (composite) sheet:

A: A melt blow nonwoven fabric made of a polypropylene composition and containing silver-based inorganic antimicrobial agent particles;

B: A composite sheet comprising a laminated sheet consisting of a polypropylene melt blow nonwoven fabric containing none of silver-based inorganic antimicrobial agent particles and a polypropylene melt blow nonwoven fabric containing silver-based inorganic antimicrobial agent particles;

C: A composite sheet comprising a laminated sheet consisting of a polypropylene spun bond nonwoven fabric containing none of silver-base inorganic antimicrobial agent particles and a polypropylene melt blow nonwoven fabric containing silver-based inorganic antimicrobial agent particles;

D: A polypropylene melt blow nonwoven fabric containing none of silver-based antimicrobial agent particles;

E: Polypropylene melt blow nonwoven fabric made of a polypropylene composition and containing silver-based antimicrobial agent particles; and F: A polypropylene melt blow nonwoven fabric containing silver-based inorganic antimicrobial agent particles attached to the surface thereof by means of binder.

2) The number of spots in which 1/100 or more by volume of individual inorganic antimicrobial agent particles are exposed on polyolefin fiber surface per $1.0 \times 10^{-2}$ mm of the fiber sheet.
3) The number of spots in which the individual inorganic antimicrobial agent particles are exposed on polyolefin fiber surface each occupying an area of 0.01 $\mu$m per $1.0 \times 10^{-2}$ mm of the fiber sheet.
4) Surface layers:
TB: thermal bond nonwoven fabric
SB: spun bond nonwoven fabric

INDUSTRIAL APPLICABILITY

The mask filter according to the present invention comprises a laminated sheet including core layer defined by the antimicrobial polyolefin fiber sheet kneaded with the inorganic antimicrobial agent particles in the polyolefin fibers consisting the antimicrobial polyolefin fiber sheet wherein a number of these particles are exposed on the fiber surfaces so that the high antimicrobial/antiviral ability can be stably activated. In addition, this mask filter exhibits high dust filtration performance, high permeability, high failure-strength and high workability into the mask. These advantageous characteristics assure the mask filter according to the present invention to be effectively used as the filter to produce the mask.

**Claims**

1.  A mask filter comprising a laminated sheet comprising a core layer defined by an antimicrobial polyolefin fiber sheet (I) selected from a polyolefin fiber sheet (Ia) and a polyolefin fiber sheet (Ib) both mentioned below and upper and lower layers of dry nonwoven fabric (II) sandwiching said core layer:

    • polyolefin fiber sheet (Ia):

        Antimicrobial polyolefin fiber sheet formed from polyolefin fibers comprising a polyolefin resin composition containing therein inorganic antimicrobial agent particles wherein said polyolefin fiber sheet has one or more spots in which one or more by volume of individual said inorganic antimicrobial agent particles are exposed on surfaces of polyolefin fibers per fiber sheet area of $1.0 \times 10^{-2}$ mm$^2$.

• polyolefin fiber sheet (Ib):

Antimicrobial polyolefin fiber sheet formed from polyolefin fibers comprising a polyolefin resin composition containing therein said inorganic antimicrobial agent particles wherein said polyolefin fiber sheet has one or more spots in which said inorganic antimicrobial agent particles are exposed on said surfaces of polyolefin fibers each occupying an area of 0.01 $\mu$m$^2$ or larger per fiber sheet area of $1.0 \times 10^{-2}$ mm$^2$ .

2.  The mask filter defined by Claim 1 wherein said inorganic antimicrobial agent particles contained in said polyolefin fibers of said antimicrobial polyolefin fiber sheet (Ia) and polyolefin fiber sheet (Ib) have an average particle diameter of 0.01 to 10 $\mu$m.

3.  The mask filter defined by Claim 1 or 2 wherein said polyolefin fibers constituting said antimicrobial polyolefin fiber sheet (Ia) and polyolefin fiber sheet (Ib) has an average fiber diameter of 0.5 to 15 $\mu$m.

4.  The mask filter defined by any one of Claims 1 through 3 wherein said polyolefin fibers constituting said antimicrobial polyolefin fiber sheet (Ia) and polyolefin fiber sheet (Ib) is made of a polyolefin resin composition obtained by mixing a polyolefin resin (A) containing said inorganic antimicrobial agent particles with a polyolefin resin (B) containing none of said inorganic antimicrobial agent particles wherein an absolute value of a difference between a melt flow rate (MFR$_A$) (g/10 min) of the polyolefin resin (A) and melt flow rate (MFR$_B$) (g/10 min) satisfies a following formula:

$$0 \leqq | \mathrm{MFR_A} - \mathrm{MFR_B} | \leqq 600 \qquad (1)$$

[both MFR$_A$ and MFR$_B$ are melt flow rates (unit: g/10 min) measured at a temperature of 230°C, under a load of 2.16 kg and for 10 minutes in accordance with JIS K 7210]

5.  The mask filter defined by any one of Claims 1 through 4 wherein said antimicrobial polyolefin fiber sheet (Ia) and polyolefin fiber sheet (Ib) are a nonwoven fabric made by a melt blow process using a polyolefin resin composition containing said inorganic antimicrobial agent particles.

6.  The mask filter defined by any one of Claims 1 through 5 wherein said laminated sheet forming said mask filter further includes a layer of polyolefin fiber sheet (III) comprising polyolefin fibers containing none of said inorganic antimicrobial agent particles sandwiched between said dry nonwoven fabric (II) as said upper and lower layers and said antimicrobial polyolefin fiber sheet (Ia) or polyolefin fiber sheet (Ib).

7.  The mask filter defined by any one of Claims 1 through 5 wherein at least said antimicrobial polyolefin fiber sheet (Ia) and polyolefin fiber sheet (Ib) are electret-treated.

8.  The mask filter defined by any one of Claims 1 through 7 wherein said respective layers constituting said laminated sheet are bonded together by means of hot melt resin or embossing treatment.

9.  The mask filter defined by any one of Claims 1 through 8 wherein said dry nonwoven fabric (II) is selected from a group consisting of a thermal bond nonwoven fabric, a spun bond nonwoven fabric and a spun lace nonwoven fabric.

10. The mask filter defined by any one of Claims 1 through 9 wherein said mask filter exhibits ventilation characteristic in a range of 10 to 200 cc/cm$^2$/sec as measured by Frajour testing method.

11. The mask produced using said mask filter defined by any one of Claims 1 through 10.

EP 2 070 564 A1

# FIG.1A

# FIG.1B

26

# FIG.2

## INTERNATIONAL SEARCH REPORT

| | International application No. |
|---|---|
| | PCT/JP2007/069383 |

A.   CLASSIFICATION OF SUBJECT MATTER
*A62B18/02*(2006.01)i, *B01D39/14*(2006.01)i, *B01D39/16*(2006.01)i, *B32B5/26*
(2006.01)i, *D04H1/40*(2006.01)i

According to International Patent Classification (IPC) or to both national classification and IPC

B.   FIELDS SEARCHED

Minimum documentation searched (classification system followed by classification symbols)
A62B18/02, D04H1/40

Documentation searched other than minimum documentation to the extent that such documents are included in the fields searched
    Jitsuyo Shinan Koho      1922-1996   Jitsuyo Shinan Toroku Koho   1996-2007
    Kokai Jitsuyo Shinan Koho   1971-2007   Toroku Jitsuyo Shinan Koho   1994-2007

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2006-249615 A  (Mitsui Chemicals, Inc.), 21 September, 2006 (21.09.06), Full text (Family: none) | 1-11 |
| Y | JP 2004-73603 A  (Tonen Tapyrus Co., Ltd.), 11 March, 2004 (11.03.04), Full text; Fig. 1 (Family: none) | 1-11 |

☐   Further documents are listed in the continuation of Box C.    ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
|    18 December, 2007 (18.12.07) |    25 December, 2007 (25.12.07) |

| Name and mailing address of the ISA/ | Authorized officer |
|---|---|
|    Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11019238 A
- JP 11267236 A
- JP 2005198676 A
- JP 5153874 A
- JP 3325915 A

**Non-patent literature cited in the description**

- *Industrial and Engineering Chemistry,* 1956, vol. 48 (8), 1342-1346